# EUROPEAN PATENT APPLICATION

(11) **EP 0 900 766 A1**
(43) Date of publication of application: **10.03.1999**
(21) Application number: 97919723.3
(22) Date of filing: 25.04.1997
(51) Int. Cl.: C02F 3/32, C02F 3/34

(54) **FLUID PURIFYING APPARATUS**

(30) Priority: 25.04.1996 JP 105687/96; 22.11.1996 JP 311733/96
(71) Applicant: DAIKIN INDUSTRIES, LTD., Kita-ku, Osaka 530 (JP)
(72) Inventor: OTOMO, Zenya, Yuugen Kaisha, Tsuchiura Kanshougyo, Tsuchiura-shi, Ibaraki 300-0822 (JP); OKUBO, Yuji, Tsuchiura-shi, Ibaraki 00-0034 (JP); TSUKUDA, Hiroshi, Daikin Industries, Ltd., Okamoto-cho, Kusatsu-shi, Shiga 525-0044 (JP); YOKOTA, Akihiro, Daikin Industries, Ltd., Okamoto-cho, Kusatsu-shi, Shiga 525-0044 (JP); ARAI, Jun-ichiro, Daikin Industries, Ltd., Tsukuba-shi, Ibaraki 305-0841 (JP)
(74) Representative: Prüfer, Lutz H., Dipl.-Phys.
(86) International application number: JP9701480
(87) International publication number: WO9739985

(57) **Abstract**

A fluid purifying apparatus comprises a light source (1), carriers (2) on which photosynthetic bacteria and/or Synecococcus are to be adhered, and a case (3) for housing fluid objected to purification. At least the carriers (2) are housed within the case (3), and the fluid is purified by metabolic operation of the photosynthetic bacteria and/or Synecococcus adhered on the carriers (2) so that the fluid is sufficiently purified even when concentrations of nitrogen compounds, phosphorus compounds, metallic ions, organic substance or the like are low.

## Description

### Technical Field

The present invention relates to a fluid purifying apparatus. More particularly, the present invention relates to a fluid purifying apparatus having a novel arrangement that photosynthetic bacteria and/or Synecococcus are employed therein.

### Background Art

From past, a method employing aerobe and a method employing anaerobe are known as a method for purifying sewage, clean water, intermediate water or the like using bio-degradation of micro-organism.

On the other hand, it has been known that photosynthetic bacteria, Synecococcus are generated in shallows of lake front, shores of a river, seashore or the like under natural environments and that the generated photosynthetic bacteria and/or Synecococcus add much to purifying of water. Therefore, water is purified to some degree by implanting of photosynthetic bacteria, Synecococcus onto small stones or the like in the shallows.

But, photosynthetic bacteria, Synecococcus implanted onto the small stones or the like performs purifying operation of water only on a side to which side light is radiated Therefore, an extremely large quantity of small stones or the like are needed to be laid for purifying a unit quantity of water so that this arrangement cannot be applied in industrial application at all.

Further, a stream of water, a quantity of water, temperature are not controlled in the above arrangement, photosynthetic bacteria, Synecococcus are apart from the small stones or the like due to disorder of balance in circumstance so that photosynthetic bacteria, Synecococcus become causes of water-bloom, red tide or the like and that photosynthetic bacteria, Synecococcus becomes supplying sources of water contaminating substance instead.

### Disclosure of Invention

The present invention was made in view of the above problems.

It is an object of the present invention to apply purification of various fluid which have BOD (Biological Oxygen Demand) of several hundreds ppm (parts per million) to several ppm, and to perform sufficient purifying operation so as to decrease those concentrations sufficiently (for example, decrease those concentrations down to a concentration which is lower than the environmental standard concentration.

A fluid purifying apparatus of a first embodiment according to the present invention comprises;
a light source,
carriers on which photosynthetic bacteria and/or Synecococcus are adhered, and
a case for housing fluid which is objected for purification,
   wherein at least the carriers are housed in the case , so that the fluid is purified by metabolic operation following radiation of light from the light source to the photosynthetic bacteria, Synecococcus adhered to the carriers.

A fluid purifying apparatus of a second embodiment according to the present invention employs the carriers made of substance which has translucency.

A fluid purifying apparatus of a third embodiment according to the present invention employs the carriers made of grass.

A fluid purifying apparatus of a fourth embodiment according to the present invention employs the carriers fixed at constant positions despite of flowing of the fluid within the case.

A fluid purifying apparatus of a fifth embodiment according to the present invention employs the carriers having irregularity on their outer faces and/or the case having irregularity on its inner face.

A fluid purifying apparatus of a sixth embodiment according to the present invention employs the light source having light guiding means for guiding light to adhered positions of the photosynthetic bacteria and/or Synecococcus.

A fluid purifying apparatus of a seventh embodiment according to the present invention employs the light source radiating light which has spectrum including spectrum of far ultra-violet rays and spectrum of other rays. The word of "far ultra-violet rays" is used as a general term for representing all rays each of which has a wavelength equal or shorter than 300 nm.

A fluid purifying apparatus of an eighth embodiment according to the present invention employs the case having a double cylinder arrangement for surrounding the light source and housing the carriers therein, and wherein the light source and the case are arranged in a coaxial manner to one another and in a separable manner from one another.

A fluid purifying apparatus of a ninth embodiment according to the present invention further comprises a light source supporting section, and wherein the light source is supported on the light source supporting section in a standing manner, and the light source supporting section has an engagement section for engaging to the case so as to support the case in a standing manner.

A fluid purifying apparatus of a tenth embodiment according to the present invention employs the case having a double cylinder arrangement for surrounding the light source and housing the carriers therein, and wherein the light source and the case are arranged in a coaxial manner to one another and in a separable manner from one another, and wherein photocatalyst is supported on the carriers which are housed within the case and are positioned at adjacent positions with respect to the inner cylinder of the case.

Wherein, the word of "photosynthetic bacteria" is used as a general term which represents Green sulfur bacteria (Chlorobiaceae), Gliding filamentous green sulfur bacteria (Chloroflexaceae), Purple sulfur bacteria (Chromatiaceae), aerobic photosynthetic bacteria, and anaerobic photosynthetic bacteria. The word "Synecococcus" is used to represent Cyanobacteria (blue bacteria). These are exemplified by Synechoccus genus, Synechocystis genus, Gloeobacter genus, Gloeocapsa genus, Dermocarpa genus, Pleurocapsa genus, Oscillatoris genus, Spirulina genus, Trichodesmium genus, Anabaena genus, Calothrix genus, Nostoc genus, Fischerella genus, Mastigocladus genus, Stigonema genus, Chlorobium genus, Chloroflexus genus, Chromatium genus, Triocapsa genus, Erythrobacter genus, and Heliobacterium genus. Anabaena, Glaeocapsa, Microcystis (water-bloom), Tolypothrix, and Phormidium are typically exemplified as the Synecococcus.

When the fluid purifying apparatus of a first embodiment according to the present invention is employed, the apparatus comprises;
a light source,
carriers on which photosynthetic bacteria and/or Synecococcus are adhered, and
a case for housing fluid which is objected for purification,
   wherein at least the carriers are housed in the case , so that the fluid is purified by metabolic operation following radiation of light from the light source to the photosynthetic bacteria, Synecococcus adhered to the carriers.

Therefore, photosynthetic bacteria and/or Synecococcus take in and use nitrogen compounds, phosphorus compounds, metallic ions, organic substance or the like so that concentrations of nitrogen compounds, phosphorus compounds, metallic ions, organic substance or the like are extremely lowered, in other words fluid is purified even when concentrations of nitrogen compounds, phosphorus compounds, metallic ions, organic substance or the like within fluid are low, because nitrogen compounds, phosphorus compounds, metallic ions, organic substance or the like are needed for metabolism of photosynthetic bacteria and/or Synecococcus.

When the fluid purifying apparatus of a second embodiment according to the present invention is employed, light can be radiated to surfaces of any side of each carrier so that photosynthesis is performed by the photosynthetic bacteria and/or Synecococcus which are adhered at any positions of each carrier thereby high fluid purifying effect is realized, because the apparatus employs the carriers made of substance which has translucency.

When the fluid purifying apparatus of a third embodiment according to the present invention is employed, in addition to the similar operation of the second embodiment, multiplicated photosynthetic bacteria and/or Synecococcus can be removed from each carrier with scarcely lowering translucency of each carrier so that a disadvantage is prevented from occurring that photosynthetic bacteria and/or Synecococcus are apart from each carrier and are decomposed so as to become a cause of fluid contamination, because the apparatus employs the carriers made of grass.

When the fluid purifying apparatus of a fourth embodiment according to the present invention is employed, parting of photosynthetic bacteria arid/or Synecococcus from each carrier due to movement of each carrier is prevented from occurring, and operation which is similar to the operation of one of the first to third embodiments is realized, because the apparatus employs the carriers fixed at constant positions despite of flowing of the fluid within the case.

When the fluid purifying apparatus of a fifth embodiment according to the present invention is employed, adhering area of photosynthetic bacteria and/or Synecococcus is increased so that fluid purifying effect is improved, and operation which is similar to the operation of one of the first to fourth embodiments is realized, because the apparatus employs the carriers having irregularity on their outer faces and/or the case having irregularity on its inner face.

When the fluid purifying apparatus of a sixth embodiment according to the present invention is employed, metabolism of photosynthetic bacteria and/or Synecococcus is activated so that fluid purifying effect is improved, and operation which is similar to the operation of one of the first to fifth embodiments is realized, because the apparatus employs the light source having light guiding means for guiding light to adhered positions of the photosynthetic bacteria and/or Synecococcus.

When the fluid purifying apparatus of a seventh embodiment according to the present invention is employed, sterilization operation by the far ultra-violet rays is performed only within an attainable range of the far ultra-violet rays having a low transmittance, and generation and growth of photosynthetic bacteria and/or Synecococcus is realized by attaining rays having spectrum other than spectrum of far ultra-violet rays, because the apparatus employs the light source radiating light which has spectrum including spectrum of far ultra-violet rays and spectrum of other rays. Therefore, coexistence of sterilization due to far ultra-violet rays and fluid purifying operation due to metabolism of photosynthetic bacteria and/or Synecococcus is realized. And, the apparatus can be greatly decreased in size and can be greatly simplified in arrangement in comparison with an apparatus in which sterilization and metabolism are performed separately from one another.

When the fluid purifying apparatus of an eighth embodiment according to the present invention is employed, operability for separating and removing photosynthetic bacteria and/or Synecococcus from each carrier is greatly improved, the photosynthetic bacteria and/or Synecococcus being accumulated metal or the like therein due to their metabolism, operability for cleaning the case in its inner side is greatly improved, and operability for maintaining and exchanging the light source is greatly improved, because the apparatus employs the case having a double cylinder arrangement for surrounding the light source and housing the carriers therein, and wherein the light source and the case are arranged in a coaxial manner to one another and in a separable manner from one another.

When the fluid purifying apparatus of a ninth embodiment according to the present invention is employed, in addition to the operation of the eighth embodiment, relative positioning relationship between the light source and the case is determined with ease and with accuracy, because the apparatus further comprises a light source supporting section, and wherein the light source is supported on the light source supporting section in a standing manner, and the light source supporting section has an engagement section for engaging to the case so as to support the case in a standing manner.

When the fluid purifying apparatus of a tenth embodiment according to the present invention is employed, not only fluid purifying operation due to metabolism of photosynthetic bacteria and/or Synecococcus but also direct sterilization due to far ultra-violet rays and oxidizing decomposition and sterilization due to photocatalyst are realized, because the apparatus employs the case having a double cylinder arrangement for surrounding the light source and housing the carriers therein, and wherein the light source and the case are arranged in a coaxial manner to one another and in a separable manner from one another, and wherein photocatalyst is supported on the carriers which are housed within the case and are positioned at adjacent positions with respect to the inner cylinder of the case. And, the apparatus can be greatly decreased in size and can be greatly simplified in arrangement in comparison with an apparatus in which sterilization and metabolism are performed separatedly from one another.

### Brief Description of Drawings

Figure 1 is a central-vertical cross sectional view schematically illustrating a fluid purifying apparatus of a first embodiment according to the present invention;
Figure 2 is a horizontal cross sectional view schematically illustrating a fluid purifying apparatus of the first embodiment according to the present invention;
Figure 3 is a diagram representing variation in concentrations (mg/l) of NO₃, and T-N following passage of days;
Figure 4 is a diagram representing variation of hardness (GH/KH) following passage of days;
Figure 5 is a horizontal cross sectional view schematically illustrating a fluid purifying apparatus of a second embodiment according to the present invention;
Figure 6 is a horizontal cross sectional view schematically illustrating a fluid purifying apparatus of a third embodiment according to the present invention;
Figure 7 is a horizontal cross sectional view schematically illustrating a fluid purifying apparatus of a fourth embodiment according to the present invention;
Figure 8 is a horizontal cross sectional view schematically illustrating a fluid purifying apparatus of a fifth embodiment according to the present invention;
Figure 9 is a diagram illustrating an arrangement of a fluid purifying system which includes the fluid purifying apparatus according to the present invention;
Figure 10 is a diagram illustrating another arrangement of a fluid purifying system which includes the fluid purifying apparatus according to the present invention;
Figure 11 is a central-vertical cross sectional view schematically illustrating a fluid purifying apparatus of a sixth embodiment according to the present invention;
Figure 12 is a central-vertical cross sectional view schematically illustrating a fluid purifying apparatus of a seventh embodiment according to the present invention;
Figure 13 is a diagram useful in understanding sterilization effect; and
Figure 14 is a diagram useful in understanding nitric acid ion removing effect.

### Best Mode for Carrying Out the Invention

Hereinafter, referring to the attached drawings, we explain embodiments of the present invention in detail.

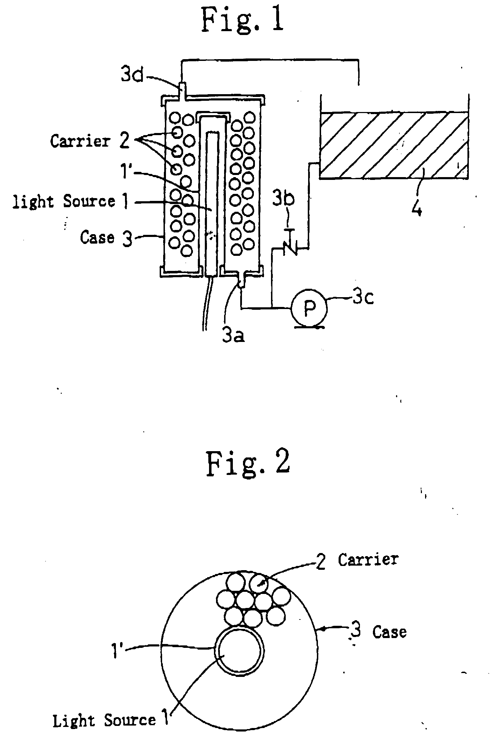

Fig. 1 is a central-vertical cross sectional view schematically illustrating a fluid purifying apparatus of a first embodiment according to the present invention, while Fig. 2 is a horizontal cross sectional view schematically illustrating a fluid purifying apparatus of the first embodiment according to the present invention.

The fluid purifying apparatus has a case 3 having a cylindrical shape, and a light source 1 is housed at the central portion of the case 3, and a plurality of carriers 2 are filled between the light source 1 and the outer wall of the case 3. Further, the light source 1 is housed within the case 3 under a condition that the light source 1 is surrounded by a casing 1' (in this embodiment, an inner wall of the case 3 which has a double cylinder arrangement is the casing 1'). The carrier 2 is made of substance having translucency (for example, glass, plastics or the like), and is formed to have an arbitrary shape. But, it is preferable that the carrier 2 is formed to have a ball shape so that an area of an outer face becomes large, to the outer face photosynthetic bacteria, Synecococcus are adhered. Furthermore, the case 3 has a cap (not llustrated) for taking out and for taking in the carriers 2 when it is needed or for exchanging the light source 1. The case 3 also has a fluid inlet 3a for guiding fluid thereinto and a fluid outlet 3d for guiding fluid therefrom. Further, the diameter of each carrier 2 is determined so that a flowing speed of fluid is determined to have a value between a predetermined range (equal or less than 1 m/min., and it is preferable to have a slower flowing speed). Specifically, when the inner diameter of the case 3 is determined to be 100 ⌀ and the outer diameter of the casing 1' is determined to be 40 ⌀, for example, the diameter of each carrier 2 is determined to be 3-20 ⌀. A fluorescent lamp, incandescent lamp, mechanism for collecting sunrays or the like are exemplified as the light source 1.

Further, as is illustrated in Fig. 1, a water tank 4 for housing water objected for purification and the fluid inlet 3a of the case 3 are communicated by interposing a bypass valve 3b and a pump 3c which are parallel to one another. And, water flowing out from the fluid outlet 3d of the case 3 is returned to the water tank 4.

Operation of the fluid purifying apparatus having the above arrangement is as follows.

Water housed within the water tank 4 which houses water objected for purification is guided to the case 3 using the pump 3c, and water flowing out from the case 3 is returned to the water tank 4 again, so that the water circulates. The light source 1 is kept turning on condition during the above operation.

At the initial stage, no photosynthetic bacteria, no Synecococcus are adhered onto the carriers 2 which are included within the fluid purifying apparatus. But, photosynthetic bacteria and Synecococcus are included within the circulating water, therefore some photosynthetic bacteria and/or Synecococcus adhere onto the surface of each carrier 2. The photosynthetic bacteria and/or Synecococcus adhered onto the surface of each carrier 2 receive the light from the light source 1 and use carbon dioxide included within the water so that the photosynthetic bacteria and/or Synecococcus perform photosynthesis so as to generate oxygen. Light requirement, aerobic requirement, and requirement of substance which become bases for multiplication are satisfied so that photosynthetic bacteria and/or Synecococcus multiply, the light requirement, aerobic requirement, and requirement of substance being needed for multiplication of photosynthetic bacteria and/or Synecococcus. In this case, only photosynthetic bacteria and/or Synecococcus which are most pertinent to the environment multiply. And, when photosynthetic bacteria and/or Synecococcus multiply, the photosynthetic bacteria and/or Synecococcus take nitrogen compounds, phosphorus compounds, metallic ions and the like therein, so that the water, is purified.

Werein, photosynthetic bacteria and/or Synecococcus do not perform biological decomposition but take nitrogen compounds, phosphorus compounds, metallic ions and the like therein for multiplication. Therefore, sufficient purification of water is realized even when concentrations of nitrogen compounds, phosphorus compounds, metallic ions and the like are low. Those concentrations are finally decreased down to a value which is sufficiently small than the environmental standard concentrations. Further, friction between carriers 2 is prevented from occurring so that parting of photosynthelic bacteria and/or Synecococcus from each carrier 2 due to friction is prevented from occurring, because the carriers 2 are filled within the case 3.

When photosynthetic bacteria and/or Synecococcus multiply too much, shadow portions increase. Photosynthesis is not performed in the shadow portions, and photosynthetic bacteria and/or Synecococcus apart from each carrier 2 or photosynthetic bacteria and/or Synecococcus wither and are decomposed, so that photosynthetic bacteria and/or Synecococcus become sources of contamination. Therefore, circulation of water is stopped when visible area of the carriers 2 is decreased down to about 1/4 of the initial area, for example, then all carriers 2 are taken out from the case 3 and photosynthetic bacteria and/or Synecococcus are removed from the carriers 2. Thereafter, the carriers 2 removed photosynthetic bacteria and/or Synecococcus therefrom are filled and water is circulated again so that purification of water is performed.

Specifically, when water is purified using the fluid purifying apparatus having the above arrangement, water including nitrogen content of several handreds ppm is purified so that the purified water includes nitrogen content of about 10⁻¹-10⁻¹² ppm. Therefore, it is understood that extremely high purification effect is realized in comparison with a conventional bacterial treating method which uses nitrifying bacteria, denitrifying bacteria or the like and which method purifies water including nitrogen content of several hundreds ppm so that the purified water includes nitrogen content of several tens ppm.

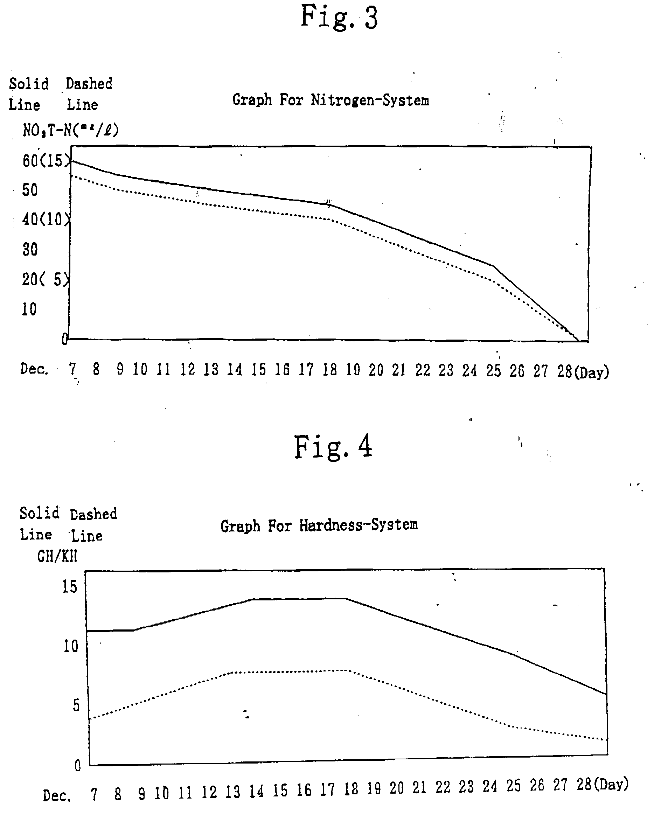

Fig. 3 is a diagram representing variation in concentrations (mg/l) of NO₃, and T-N (total nitrogen quantity) following passage of days, while Fig. 4 is a diagram representing variation of hardness {GH (total hardness)/KH (calcium hardness)} following passage of days. In Fig. 3, a solid line represents the concentration of NO₃, and a dashed line represents the concentration of T-N. In Fig. 4, a solid line represents GH, and a dashed line represents KH.

As is apparent from Fig. 3, concentrations of NO₃, and T-N are sufficiently decreasing. Further, concentrations of NO₃, and T-N are decreasing even when generation of photosynthetic bacteria and/or Synecococcus is not recognized just after starting of the operation. It is thought that photosynthetic bacteria and/or Synecococcus operate under a flowing condition.

As is apparent from Fig. 4, hardnesses are increasing just after starting of the operation, but hardnesses are sufficiently decreasing due to adsorption after great quantity of generation of photosynthetic bacteria and/or Synecococcus. It is thought that increasing in hardness just after starting of the operation is due to elution of metal (mineral) from bottom sand which has been lost biological membrane by washing operation.

Further, photosynthetic bacteria and/or Synecococcus directly act organic substance, generate sugar, polysaccharide by metabolism, make change death body to protein, adsorb remaining nitrogen compounds, adsorb phosphoric acid partially, help other processing methods, adsorb metal partially such as heavy metal which was not effective by other processing methods, and perform oxidation or deoxidization. And, photosynthetic bacteria and/or Synecococcus purify water due to integral effect of those operations.

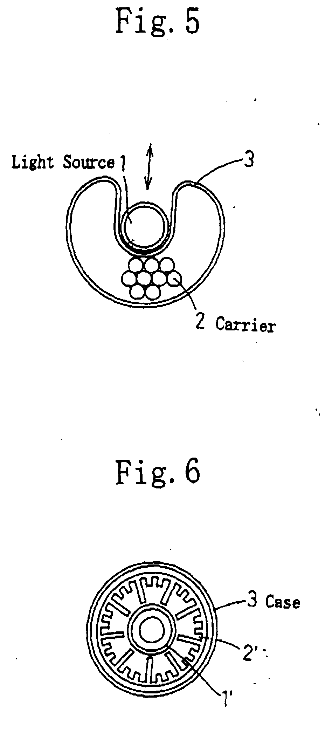

Fig. 5 is a horizontal cross sectional view schematically illustrating a fluid purifying apparatus of a second embodiment according to the present invention.

This embodiment is different from the first embodiment in that a case 3 having nearly U-shaped plan view is employed, and in that the light source 1 is able to be installed and removed with respect to the case 3 in a direction which is vertical to the axial direction of the light source 1.

Therefore, the light source 1 can be installed or removed with ease, when the second embodiment is employed.

Fig. 6 is a horizontal cross sectional view schematically illustrating a fluid purifying apparatus of a third embodiment according to the present invention.

This embodiment is different from the first embodiment in that fold shaped carriers 2' which extend from peripheral portion of the case 3 towards the center of the case 3 are employed instead of the ball shaped carriers 2.

Therefore, friction between carriers 2' is not needed to take into consideration, and operations which is similar to operations of the first embodiment are realized, when the third embodiment is employed.

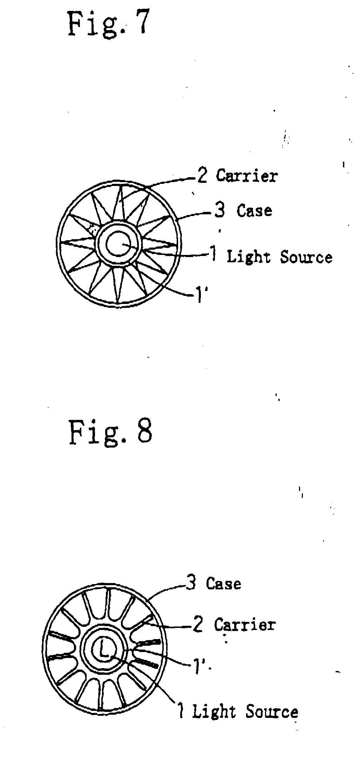

Fig. 7 is a horizontal cross sectional view schematically illustrating a fluid purifying apparatus of a fourth embodiment according to the present invention.

This embodiment is different from the first embodiment in that radial and tapering carriers 2'' which extend from the center of the case 3 towards peripheral portion of the case 3 are employed instead of the ball shaped carriers 2.

Therefore, friction between carriers 2'' is not needed to take into consideration, and good light radiation is realized because the carriers 2'' act as light guiding means, and operations which is similar to operations of the first embodiment are realized, when the fourth embodiment is employed.

Fig. 8 is a horizontal cross sectional view schematically illustrating a fluid purifying apparatus of a fifth embodiment according to the present invention.

This embodiment is different from the fourth embodiment in that radial carriers 2''' having constant thickness which extend from the center of the case 3 towards peripheral portion of the case 3 are employed instead of the tapering carriers 2''.

Therefore, operations which is similar to operations of the fourth embodiment are realized, when the fifth embodiment is employed.

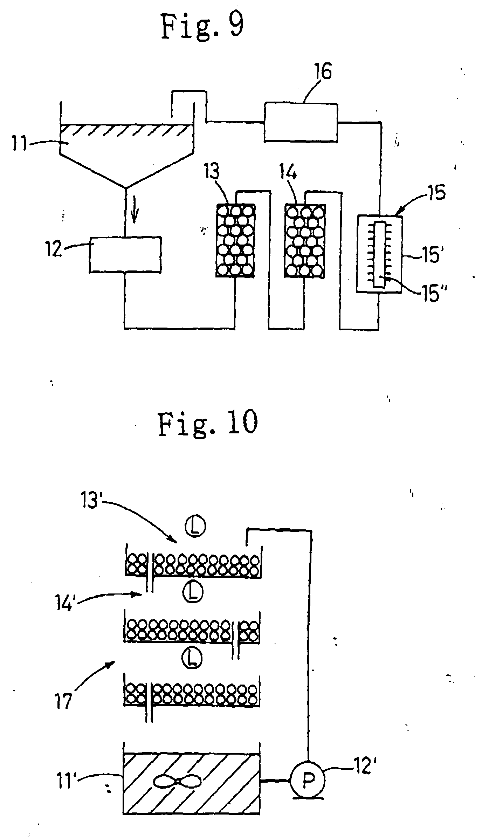

Fig. 9 is a diagram schematically illustrating a fluid purifying system of an arrangement which includes therein the fluid purifying apparatus according to the present invention.

This system supplies water within a water tank 11 to a first purifying apparatus 13 using a pump 12, supplies water flowing out from the first purifying apparatus 13 to a second purifying apparatus 14, supplies water flowing out from the second purifying apparatus 14 to a sterilization apparatus 15, and supplies water flowing out from the sterilization apparatus 15 to the water tank 11 through a temperature controlling apparatus 16 which is known from the past.

The first purifying apparatus 13 and the second purifying apparatus 14 have arrangements which are similar to the arrangement of the fluid purifying apparatus illustrated in Fig. 1 or the arrangement of the fluid purifying apparatus illustrated in Fig. 2. Further, the sterilization apparatus 15 has an arrangement in that a bactericidal lamp 15'' is provided with a casing 15' in its interior, the casing 15' temporarily housing fluid.

Operation of the fluid purifying system having the above arrangement is as follows.

Water within the water tank 11 is taken out from the water tank 11 by the pump 12. The taken out water passes through the first purifying apparatus 13, the second purifying apparatus 14, the sterilization apparatus 15 and the temperature controlling apparatus 16 in this order, and returns to the water tank 11 again.

In the first purifying apparatus 13 and the second purifying apparatus 14, photosynthetic bacteria and/or Synecococcus are adhered and multiplied on the carriers. When photosynthetic bacteria and/or Synecococcus are multiplied, the photosynthetic bacteria and/or Synecococcus take therein and use nitrogen compounds, phosphorus compounds, metallic ions and the like so as to purify the water. Further, photosynthetic bacteria and/or Synecococcus possibly be removed (parted) by every small quantity, but such removed photosynthetic bacteria and/or Synecococcus are sterilized (killed) by the sterilization apparatus 15.

Furthermore, photosynthetic bacteria and/or Synecococcus are multiplied excessively and are died during an operation of the system for a long time period. Therefore, the first purifying apparatus 13 and the second purifying apparatus 14 are exchanged with a new purifying apparatus alternately prior to realization of such condition so that disadvantages due to excessively multiplication, and dying are prevented from occurring.

Fig. 10 is a diagram schematically illustrating a fluid purifying system of another arrangement which includes the fluid purifying apparatus according to the present invention.

This system supplies water within a water tank 11' to a first purifying apparatus 13' using a pump 12', supplies water flowing down from the first purifying apparatus 13' to a second purifying apparatus 14', supplies water flowing down from the second purifying apparatus 14' to a third purifying apparatus 17, and supplies water flowing down from the third purifying apparatus 17 to the water tank 11'.

Therefore, the system performs purifying Operation of water in triple stages so that extremely high water purification effect is realized.

The above embodiments are described for purifying water, but fluid other than water can be purified by applying photosynthetic bacteria and/or Synecococcus similarly when photosynthetic bacteria and/or Synecococcus can be multiplied within the fluid. Further, it is preferable that the carrier 2 has translucency, but the carrier 2 must not have translucency. When the carrier 2 has not translucency, opaque plastics, polymer of micro-organisms or the like are applicable for the carrier.

Further, in the fluid purifying apparatus of the embodiments illustrated in Figs. 1, 5 through 8, it is preferable that a light source is employed which includes far ultra-violet rays and other rays having spectrum other than the spectrum of far ultra-violet rays as the light source 1. Wherein, the far ultra-violet rays are rays having wavelength which is equal or shorter than 300 nm. Following this arrangement, at least a portion to which light is radiated from the light source 1 among the case 3 is made of substance such as quartz glass which permits transmission of far ultra-violet rays therethrough.

From past, it was thought that sterilization process using far ultra-violet rays give bad influence to purifying operation using living bodies. Therefore, the sterilization process using far ultra-violet rays and the purifying process using living bodies are constructed as separated apparatus from one another.

The inventors have earnestly advanced their research, and have found that the far ultra-violet ray having a wavelength of 257 nm is decreased its intensity by 50 % at a position which is apart by about 1 cm from a light incident face of the case 3, and have found that the far ultra-violet ray is decreased its intensity by 50 % with a shorter distance when the far ultra-violet ray transmits within the translucent carriers. Further, the light source 1 has not only far ultra-violet rays but also rays having wavelength of equal or more than 350 nm which rays add much to photorecovery operation and rays having wavelength of equal or more than 400 nm which rays add much to growth of photosynthetic bacteria and/or Synecococcus. The inventors have earnestly advanced their research, and have found that photosynthetic bacteria and/or Synecococcus are not generated nor grown on the carriers which are adjacent to at least a portion to which light from the light source 1 is radiated among the case 3, and have found that photosynthetic bacteria and/or Synecococcus are generated on the carriers which are apart from the portion to some degree so that purification of fluid due to metabolism operation.

Therefore, when a light source having far ultra-violet rays and other rays having spectrum which is different from the spectrum of the far ultra-violet rays is employed as the light source 1, coexistence of direct sterilization operation due to the far ultra-violet rays and purifying operation due to metabolic operation of photosynthetic bacteria and/or Synecococcus. And, decreasing in size and simplification in arrangement in its entirety are realized in comparison with the arrangement in which sterilization apparatus and purification apparatus are provided separatedly from one another. Further, an operating ratio of the direct sterilization and purification can be controlled by selecting a spectral distribution of the light source 1 to have a desired spectral distribution.

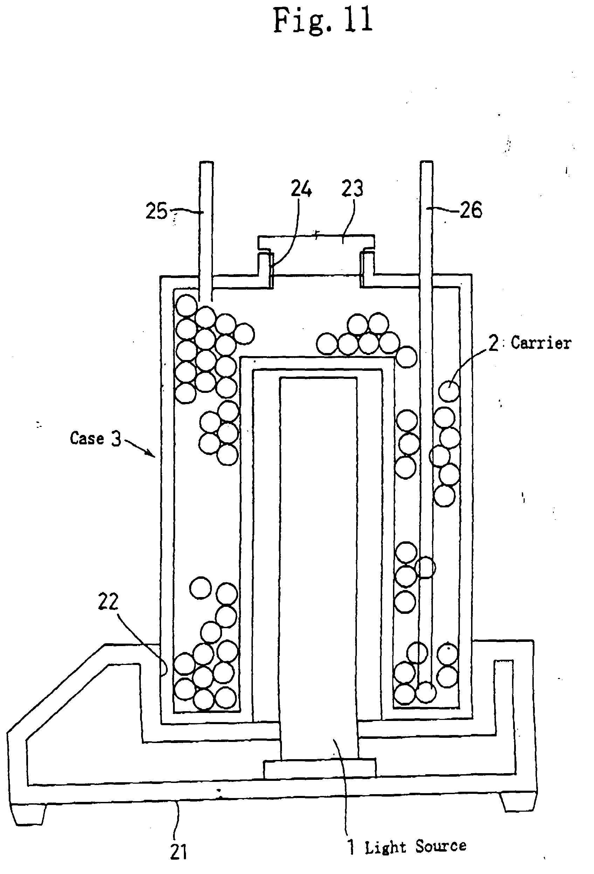

Fig. 11 is a central-vertical cross sectional view schematically illustrating a fluid purifying apparatus of a sixth embodiment according to the present invention.

In the fluid purifying apparatus, a light source 1 is supported at a predetermined of a light source supporting member 21, and the light source supporting member 21 has a concave section 22 for supporting a case, the concave section 22 and the light source 1 being coaxial to one another. Further, a case 3 for housing ball shaped carriers 2 made of translucent substance has a double cylinder arrangement, and an inner diameter of an inner wall of the case 3 is determined to be greater than the outer diameter of the light source 1 to some degree. And, an outer diameter of an outer wall of the case 3 is determined to be nearly equal to an inner diameter of the concave section 22. Further, an opening section 24 is formed at the central section of an upper wall of the case 3, and a cap 23 is provided to the opening section 24 in a removable manner. Therefore, the carriers 2 can be housed within the case 3 through the opening section 24, and the carriers 2 can be taken out from the case 3 through the opening section 24. Further, a pair of pipes 25 and 26 are provided which pass through a peripheral section of the upper wall of the case 3 so that fluid can be supplied to and taken out from the case through the pipes 25 and 26. These pipes 25 and 26 may be flexible. These pipes 25 and 26 may be provided in a removable manner.

The case 3 is sufficient that at least the inner wall section is translucent. It is preferable that the outer wall section is also translucent so that recognizing of growing condition of photosynthetic bacteria and/or Synecococcus is performed easily.

When the fluid purifying apparatus having the above arrangement is employed, fluid is purified similarly to the fluid purifying apparatus of each of above embodiments. When photosynthetic bacteria and/or Synecococcus which are grown on the carriers 2 due to metabolism should be removed from the carriers 2, the case 3 is removed from the concave section 22 and the grown photosynthetic bacteria and/or Synecococcus together with the carriers 2 can easily be taken out from the case 3 through the opening section 24 so that operation for removing photosynthetic bacteria and/or Synecococcus from the carriers 2 can be simplified. By performing the above operation, a disadvantage is prevented from occurring that photosynthetic bacteria and/or Synecococcus grown to or more some degree separate apart from the carriers 2 and die so that taken metal or the like are liquated out again within the fluid.

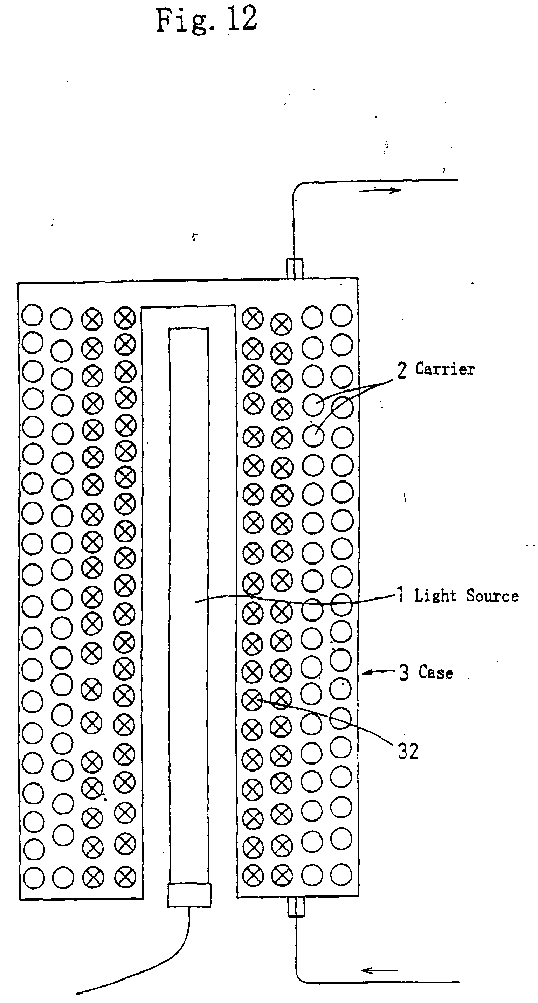

Fig. 12 is a central-vertical cross sectional view schematically illustrating a fluid purifying apparatus of a seventh embodiment according to the present invention.

The fluid purifying apparatus employs a light source 1 which radiates rays of which spectrum includes far ultra-violet rays and spectrum other than the far ultra-violet rays, and employs a case 3 for housing ball shaped carriers 2 and 32 made of translucent substance which case 3 has a double cylinder arrangement and has an inner diameter of an inner wall of the case 3 slightly greater than the outer diameter of the light source 1. Further, photocatalyst is coated on each carrier 32 which is housed within the case 3 in a condition that the carriers 32 are adjacent to the inner wall of the case 3. Of course, the inner wall section of the case 3 is made of substance which allows passing of the far ultra-violet rays therethrough. Wherein, for securing the carriers 32 being housed within the case 3 adjacent to the inner wall section when the carriers 2 and 32 are to be housed within the case 3, and for simplifying the housing operation of the carriers 2 and 32, it is preferable that a partition member is previously housed within the case 3, then the carriers 2 and 32 are respectively housed within regions divided by the partition member, thereafter the partition member is taken out from the case 3. But, the taking out operation of the partition member can be omitted in consequence of material and shape of the partition member. Further, the carriers 2 may have various shapes as is represented in each of the embodiments.

When the fluid purifying apparatus having the above arrangement is employed, direct sterilization due to far ultra-violet rays is realized at a portion which is nearest to the inner wall section of the case 3, sterilization of bacteria or the like and oxidation and decomposition of humin or the like due to oxidation operation of photocatalyst are realized by exciting photocatalyst on the carriers 32 by near ultra-violet rays, and purifying nitrogen compounds, phosphorus compounds and metallic ions due to photosynthetic bacteria and/or Synecococcus which are generated and grown on the carriers 2 which are positioned in the outer positions with respect to the carriers 32 is realized.

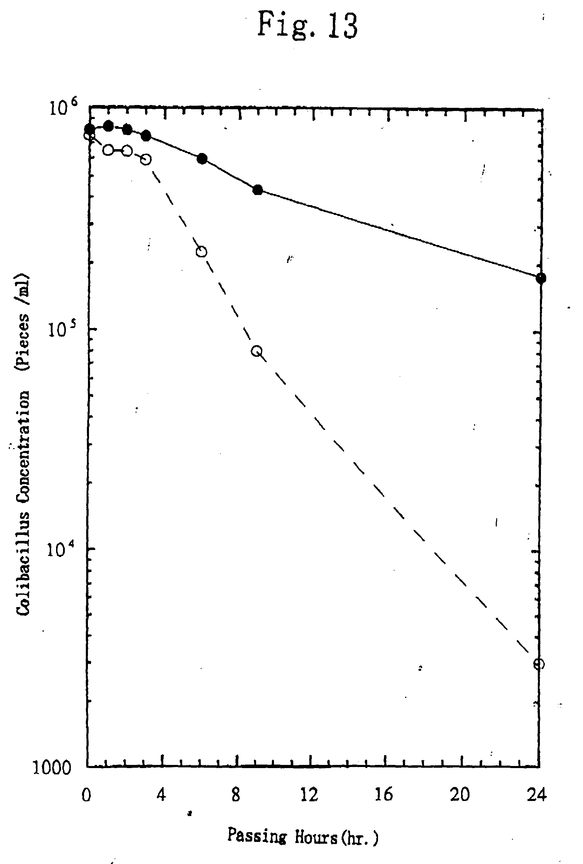

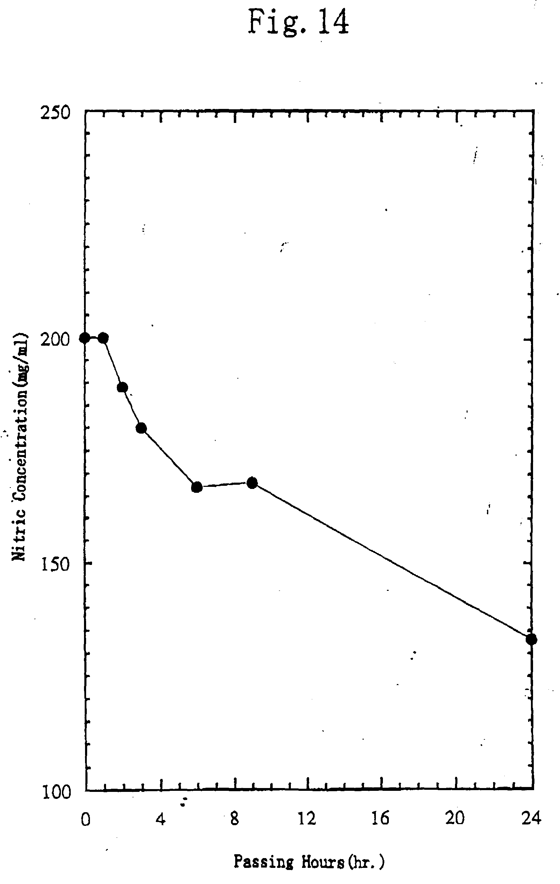

When fluid is purified using the fluid purifying apparatus of this embodiment, it is recognized that a number of colibacillus is decreased as is illustrated by a dashed line in Fig. 13. When a light source is employed which has spectrum scarcely including far ultra-violet rays or including no far ultra-violet rays, it is recognized that a number of colibacillus is scarcely decreased as is illustrated by a solid line in Fig. 13. Therefore, it is understood that sterilization operation is realized by employing this embodiment by comparing the solid line and the dashed line. Further, it is recognized that a concentration of nitric acid is decreased as is illustrated in Fig. 14.

### Industrial Applicability

As is apparent from the foregoing, the fluid purifying apparatus according to the present invention purifies nitrogen compounds, phosphorus compounds, metallic ions, organic substance and the like which are included within fluid such as living drainage, industrial drainage or the like.

## Claims

1. A fluid purifying apparatus comprising:
a light source (1);
carriers (2)(2')(2'')(2''') on which photosynthetic bacteria and/or Synecococcus are adhered; and
a case (3) for housing fluid which is objected for purification;
wherein at least the carriers (2)(2')(2'')(2''') are housed in the case (3), so that the fluid is purified by metabolic operation following radiation of light from the light source (1) to the photosynthetic bacteria, Synecococcus adhered to the carriers (2)(2')(2'')(2''').

2. A fluid purifying apparatus as set forth in claim 1, wherein the carriers (2)(2')(2'')(2''') are made of substance which has translucency.

3. A fluid purifying apparatus as set forth in claim 2, wherein the carriers (2)(2')(2'')(2''') are made of grass.

4. A fluid purifying apparatus as set forth in one of claims 1-3, wherein the carriers (2)(2')(2'')(2''') are fixed at constant positions despite of flowing of the fluid within the case (3).

5. A fluid purifying apparatus as set forth in one of claims 1-4, wherein the carriers (2)(2')(2'')(2''') have irregularity on their outer faces and/or the case (3) has irregularity on its inner face.

6. A fluid purifying apparatus as set forth in one of claims 1-5, wherein the light source (1) has light guiding means for guiding light to adhered positions of the photosynthetic bacteria and/or Synecococcus.

7. A fluid purifying apparatus as set forth in one of claims 1-6, wherein the light source (1) radiates light which has spectrum including spectrum of far ultra-violet rays and spectrum of other rays.

8. A fluid purifying apparatus as set forth in one of claims 1-7, wherein the case (3) has a double cylinder arrangement for surrounding the light source (1) and houses the carriers (2)(2')(2'')(2''') therein, and the light source (1) and the case (3) are arranged in a coaxial manner to one another and in a separable manner from one another.

9. A fluid purifying apparatus as set forth in claim 8, further comprising a light source supporting section (21), and wherein the light source (1) is supported on the light source-supporting section (23) in a standing manner, and the light source supporting section (23) has an engagement section (22) for engaging to the case (3) so as to support the case (3) in a standing manner.

10. A fluid purifying apparatus as set forth in claim 7, wherein the case (3) has a double cylinder arrangement for surrounding the light source (1) and houses the carriers (2)(2')(2'')(2''') therein, and the light source (1) and the case (3) are arranged in a coaxial manner to one another and in a separable manner from one another, and photocatalyst is supported on the carriers (2)(2')(2'')(2''') which are housed within the case (3) and are positioned at adjacent positions with respect to the inner cylinder of the case (3).
